# EUROPEAN PATENT APPLICATION

(11) **EP 4 559 604 A1**
(43) Date of publication of application: **28.05.2025**
(21) Application number: 23842820.5
(22) Date of filing: 05.07.2023
(51) Int. Cl.: B23C 5/10, B23B 27/20, B23C 5/16, B29C 33/38

(54) **END MILL, METHOD FOR PRODUCING MOLD FOR CREATING MICROLENS, AND DEVICE FOR PRODUCING MOLD FOR CREATING MICROLENS**

(30) Priority: 21.07.2022 JP 2022116247
(71) Applicant: Dexerials Corporation, Shimotsuke-shi, Tochigi 323-0194 (JP)
(72) Inventor: SUZUKI, Yuta, Shimotsuke-shi, Tochigi 323-0194 (JP); DOI, Katsuhiro, Shimotsuke-shi, Tochigi 323-0194 (JP); NODA, Kazuhiko, Shimotsuke-shi, Tochigi 323-0194 (JP)
(74) Representative: Ter Meer Steinmeister & Partner
(86) International application number: PCT/JP2023/024854
(87) International publication number: WO 2024/018895

(57) **Abstract**

An end mill is provided, which includes a cutter portion that has a convex shape having a curved surface. The convex shape is a half of a conical body obtained by dividing the conical body into two along a plane including a center line passing through a center of a bottom surface of the conical body. The conical body includes a tip portion, the bottom surface having a circular shape, and a circumferential surface including an enlarged diameter region having a diameter larger than a diameter of the bottom surface, where a tip of the tip portion is positioned on the center line passing through the center of the bottom surface.

## Description

### TECHNICAL FIELD

The present invention relates to end mills, methods of producing microlens production molds, and apparatuses of producing microlens production molds.

### BACKGROUND ART

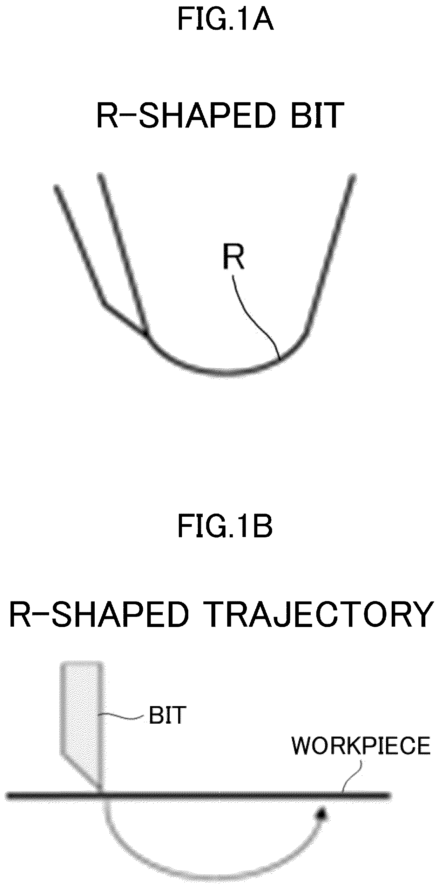

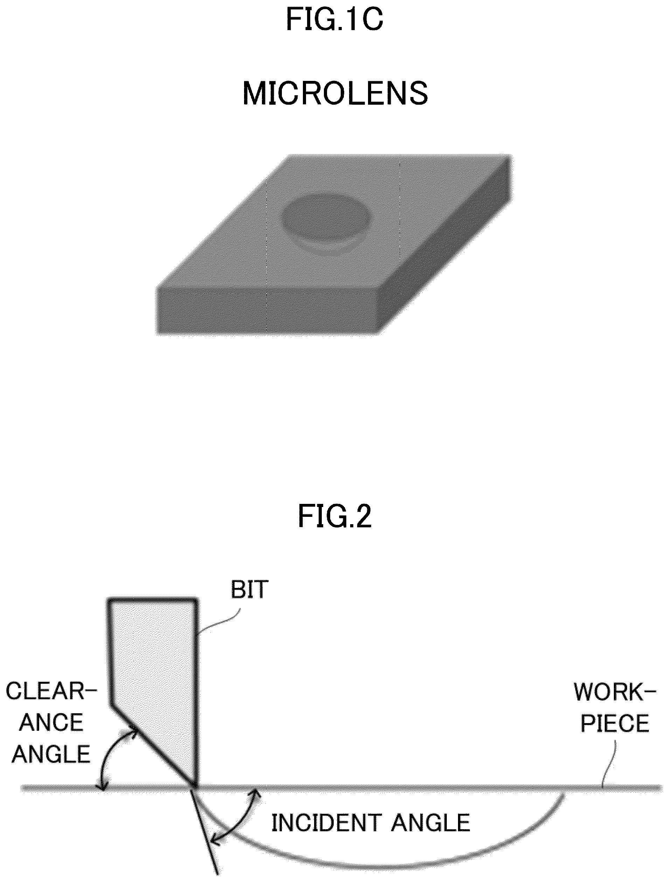

In the case where a microlens master is formed by machining, it has been known that a microlens is formed by moving an R-shaped bit along an R-shaped trajectory (see Figs. 1A to 1C). The bit is provided with a "clearance" so that a portion other than a cutter portion does not come into contact with a workpiece during cutting. As illustrated in Fig. 2, there is however a production limit for an angle of clearance (clearance angle). Specifically, cutting can be performed only at an incident angle at which the "clearance" of the bit does not come into contact with the workpiece during the cutting, and therefore it is difficult to perform cutting (deep milling) of a deep microlens.

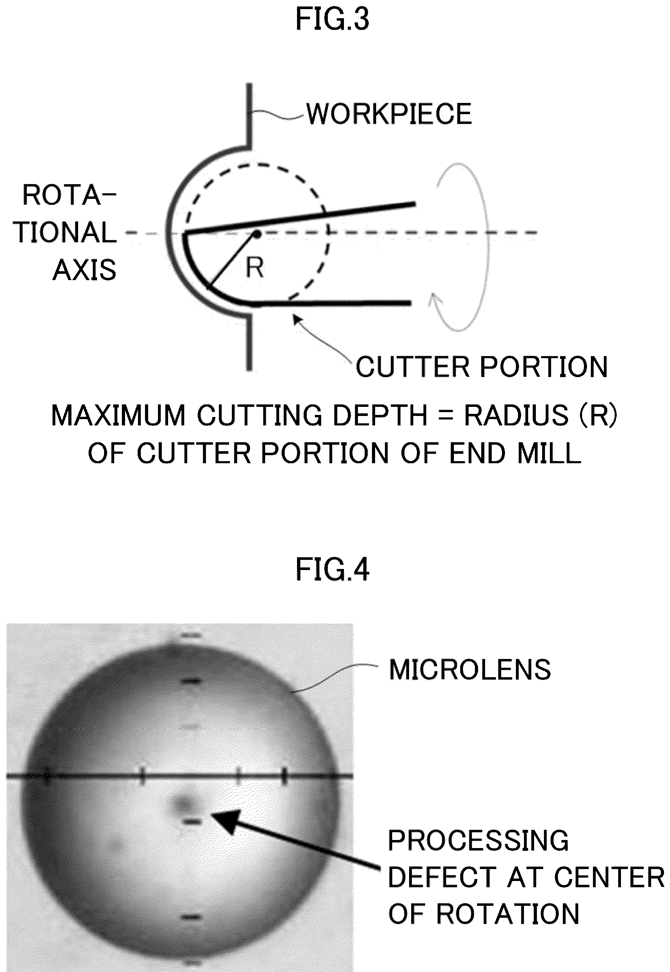

Therefore, as a processing method of microlenses enabling deep milling, cutting using a ball end mill whose top shape is a sphere is exemplified. As illustrated in Fig. 3, cutting of a deep microlens can be achieved by performing cutting while rotating the ball end mill at high speed. As the above ball end mill, for example, a nose end mill produced by round forming is proposed in Fig. 1 of Patent Document 1.

### CITATION LIST

### PATENT DOCUMENTS

Patent Document 1: Japanese Unexamined Patent Application Publication No. 2013-511394

### SUMMARY OF THE INVENTION

### TECHNICAL PROBLEM

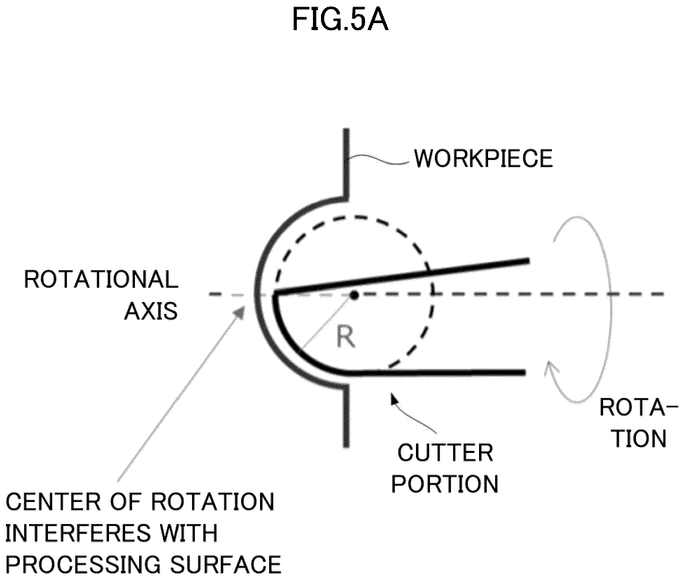

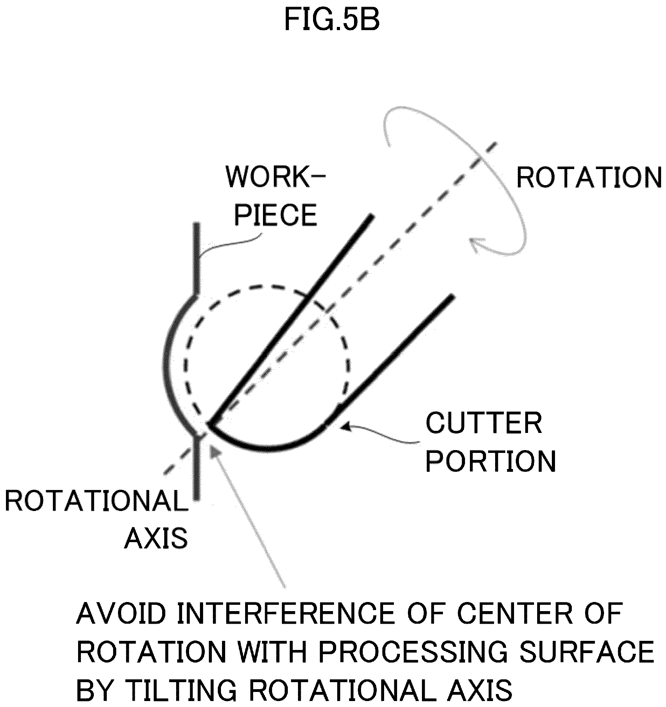

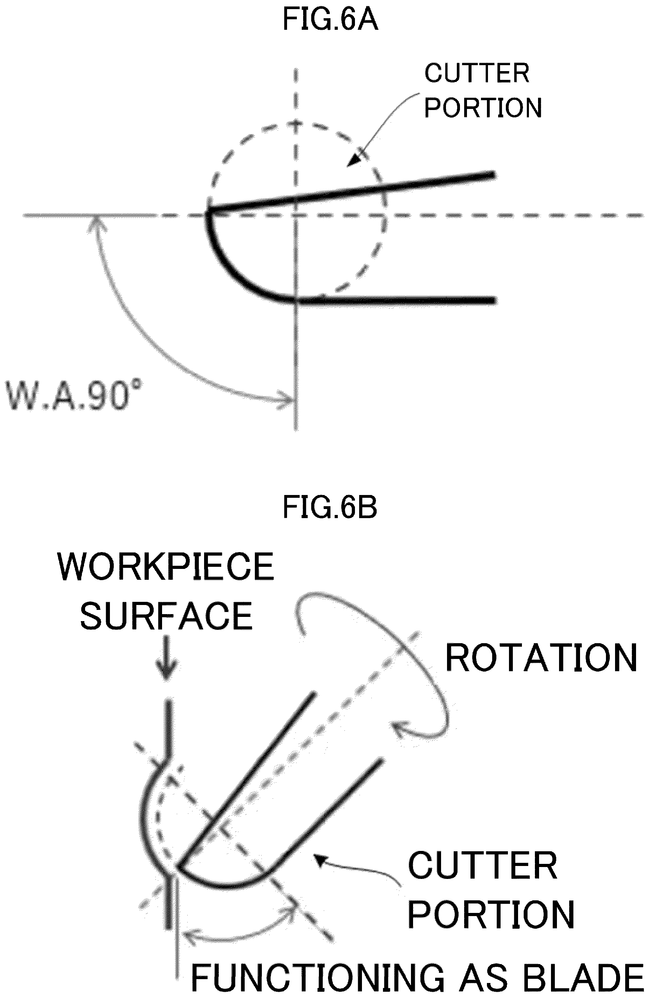

However, the ball end mill of the related art has a problem that a center of rotation of the end mill interferes with a processing surface to form a processing defect (cutting mark) (see Fig. 4). Therefore, as a method that does not cause a processing defect on a processing surface, it is conceivable to perform cutting on a workpiece with a rotational axis of a cutter portion of an end mill tilted with respect to the processing surface, thereby avoiding interference between the processing surface and the center of rotation of the end mill (see Figs. 5A and 5B). However, the cutter portion of the end mill has an effective blade range (window angle (W.A.)) that is a range in which the cutter portion functions as a blade. Therefore, there is a problem that when the rotational axis of the cutter portion of the end mill is tilted, a cuttable depth becomes shallow compared with horizontal cutting or vertical cutting (see Figs. 6A and 6B).

Moreover, the nose end mill produced by round forming has a cutter portion including two or more blades, and therefore a diameter of the cutter portion becomes large. There is a problem such that the nose end mill cannot be applied for cutting of a fine microlens having an outer diameter of 100 µm or less.

The present invention aims to solve the above various problems existing in the related art and to achieve the following object. Specifically, an object of the present invention is to provide an end mill that can perform cutting of a deeper microlens without causing a processing defect due to a center of rotation of the end mill, a method of producing a microlens production mold using the end mill, and an apparatus of producing a microlens production mold including the end mill.

### SOLUTION TO THE PROBLEM

In order to solve the above-described problems, one aspect of the present invention provides an end mill including a cutter portion. The cutter portion has a convex shape having a curved surface. The convex shape is a half of a conical body obtained by dividing the conical body into two along a plane including a center line passing through a center of a bottom surface of the conical body. The conical body includes a tip portion, the bottom surface having a circular shape, and a circumferential surface including an enlarged diameter region having a diameter larger than a diameter of the bottom surface, where a tip of the tip portion is positioned on the center line passing through the center of the bottom surface.

### EFFECTS OF THE INVENTION

The present invention can provide an end mill that can perform cutting of a deeper microlens without causing a processing defect due to a center of rotation of the end mill, a method of producing a microlens production mold using the end mill, and an apparatus of producing a microlens production mold including the end mill.

### BRIEF DESCRIPTION OF THE DRAWINGS

[Fig. 1A] Fig. 1A is a schematic view illustrating an example of an R-shaped bit.
[Fig. 1B] Fig. 1B is a view explaining a method in which the R-shaped bit is moved along an R-shaped trajectory to form a microlens.
[Fig. 1C] Fig. 1C is a schematic diagram illustrating a microlens formed by moving the R-shaped bit along the R-shaped trajectory.
[Fig. 2] Fig. 2 is a view explaining that a workpiece can be cut only at an incident angle of a bit at which the workpiece does not come into contact with "clearance" of the bit during cutting, so that it is difficult to perform cutting for forming a deep microlens.
[Fig. 3] Fig. 3 is a view describing a method of performing cutting to form a deep microlens using a ball end mill.
[Fig. 4] Fig. 4 is a view explaining that a center of rotation of the end mill interferes with a processing surface to be cut by the ball end mill, thereby causing a processing defect.
[Fig. 5A] Fig. 5A is a view illustrating a state in which cutting is performed on a workpiece using a ball end mill.
[Fig. 5B] Fig. 5B is a view describing a method of cutting a workpiece with a rotational axis of a ball end mill being tilted.
[Fig. 6A] Fig. 6A is a schematic view illustrating an example of a cutter portion of a ball end mill of the related art.
[Fig. 6B] Fig. 6B is a view describing that when a rotational axis of the cutter portion of the ball end mill of the related art is tilted, a cuttable depth becomes shallow compared with horizontal cutting or vertical cutting.
[Fig. 7] Fig. 7 is a schematic view illustrating an example of an end mill of the present invention.
[Fig. 8A] Fig. 8A is a view illustrating a conical body for forming a cutter portion of the end mill of the present invention.
[Fig. 8B] Fig. 8B is a view illustrating one of semi-conical bodies, which constitutes the cutter portion of the end mill of the present invention and is obtained by dividing the conical body into two.
[Fig. 8C] Fig. 8C is a view illustrating that the conical body for forming the cutter portion of the end mill of the present invention is divided into two.
[Fig. 9A] Fig. 9A is a schematic view illustrating another example of the cutter portion of the end mill of the present invention.
[Fig. 9B] Fig. 9B is a schematic view illustrating a state in which cutting of a microlens is performed using the end mill of the present invention.
[Fig. 10A] Fig. 10A is a CAD image illustrating the cutter portion of the end mill of Comparative Example 1.
[Fig. 10B] Fig. 10B is a view illustrating a microlens produced using the end mill of Comparative Example 1.
[Fig. 11A] Fig. 11A is a CAD image illustrating the cutter portion of the end mill of Example 1.
[Fig. 11B] Fig. 11B is a view illustrating a microlens array produced using the end mill of Example 1.

### DESCRIPTION OF EMBODIMENTS

### (End mill)

The end mill of the present invention includes a cutter portion, preferably a shank portion, and may further include other members as necessary.

The end mill is used for various cutting, for example, by attaching the end mill to a milling machine, a machining center (M/C), or the like and moving the end mill in three-dimensional directions with respect to a horizontal plane, a vertical plane, or a curved plane.

### <Cutter portion>

The cutter portion has a convex shape having a curved surface. The convex shape is a half of a conical body obtained by dividing the conical body into two along a plane including a center line passing through a center of a bottom surface of the conical body. The conical body includes a tip portion, the bottom surface having a circular shape, and a circumferential surface including an enlarged diameter region having a diameter larger than a diameter of the bottom surface, where a tip of the tip portion is positioned on the center line passing through the center of the bottom surface. In the present specification, the "circular shape" includes a substantially circular shape, the "conical body" includes a substantially conical body, and the "convex shape" includes a substantially convex shape.

According to the above configuration, the cutter portion of the end mill has a shape with which an effective blade range (W.A.), which is a range where the cutter portion of the end mill functions as a blade, can be increased to greater than 90 degrees and less than 180 degrees. Even if cutting is performed with a rotational axis of the cutter portion of the end mill being tilted with respect to a processing surface of a mold base, cutting of a deeper and high quality microlens can be achieved without causing a processing defect due to a center of rotation of the cutter portion of the end mill.

The convex shape having the curved surface is not particularly limited as long as the convex shape at least partially has a curved surface. The convex shape having the curved surface can be appropriately selected depending on the intended purpose. Examples of the convex shape having the curved surface include substantially semi-conical shapes, substantially semi-elliptical conical shapes, semi-cylindrical shapes, and the like.

In the cutter portion, a surface profile of the circumferential surface on a cross-section of the cutter portion is preferably a curved line, where the cross-section of the cutter portion is perpendicular to both the plane including the center line and the bottom surface, and includes the center line. In the present specification, the "perpendicular" includes substantially perpendicular. Since the surface profile of the circumferential surface is a curved line as described above, cutting of a deeper and high quality microlens can be achieved.

The curved line is preferably an arc or an elliptical arc, and more preferably an arc. In the present specification, the "arc" means a part of a circumference of a perfect circle. The "elliptical arc" means a part of a circumferential surface of an ellipse. Since the curved line is an arc or an elliptical arc as described above, cutting of a deeper and high quality microlens can be performed with high precision.

The end mill can be rotated about a rotational axis, and an angle (effective blade range (W.A.)) formed between a straight line connecting an end of the cutter portion on a rotational-axis side and a center of the cutter portion, and a straight line connecting the other end of the cutter portion and the center of the cutter portion is preferably greater than 90 degrees and less than 180 degrees, and more preferably 100 degrees or more and 150 degrees or less. According to the above configuration, even if cutting is performed with the rotational axis of the cutter portion of the end mill being tilted with respect to a processing surface of a mold base, cutting of a deeper and high quality microlens can be achieved without causing a processing defect due to a center of rotation of the cutter portion of the end mill.

The rotational axis of the end mill means a center of rotation of the end mill when the end mill is given a rotational motion.

The center of the cutter portion means a point which is equidistant from one end and the other end of the cutter portion on the curve formed by the one end and the other end of the cutter portion.

Moreover, the cutter portion is disposed on one side with respect to the rotational axis so that the cutter portion is formed of a single blade, and therefore a fine microlens having an outer diameter of 100 µm or less can be suitably produced.

The maximum diameter of the surface profile of the circumferential surface of the cutter portion is preferably 100 µm or less, more preferably 10 µm or greater and 100 µm or less, and yet more preferably 10 µm or greater and 50 µm or less. When the maximum diameter of the surface profile of the circumferential surface of the cutter portion is 100 µm or less, the end mill can be applied for cutting for a fine microlens having an outer diameter of 100 µm or less.

Examples of a material of the cutter portion of the end mill include a single-crystal diamond, a polycrystalline diamond, cubic boron nitride (CBN), a ceramic (an alumina-based ceramic, a titanium carbide-based ceramic, and a silicon nitride-based ceramic), cermet, cemented carbide, high-speed tool steel (high-speed steel), carbon tool steel, and the like. Among the above materials, a single-crystal diamond is preferred. When a single-crystal diamond is used as the material of the cutter portion, a clean cut surface can be formed from processing, compared with a case where a polycrystalline diamond is used.

The cutter portion having the above-described shape and structure can be produced, for example, by ultra-precision polishing.

### <Shank portion>

The shank portion is a portion of the end mill excluding the cutter portion, and is, for example, a portion of the end mill that is rotatably held with a machining center (M/C) or a milling machine.

A shape, dimensions (length and diameter), material, and the like of the shank portion are not particularly limited, and may be appropriately selected according to the intended purpose. The shank portion is ideally highly precisely designed in order to minimize swinging of the end mill when the end mill is rotated at high speed.

The cutter portion is preferably fixed to the shank portion by brazing. The brazing can securely fix the cutter portion to the shank portion compared with screwing.

### <Other members>

Other members are not particularly limited, and may be appropriately selected according to the intended purpose. Examples of the other members include a neck portion disposed between the shank portion and the cutter portion, and the like.

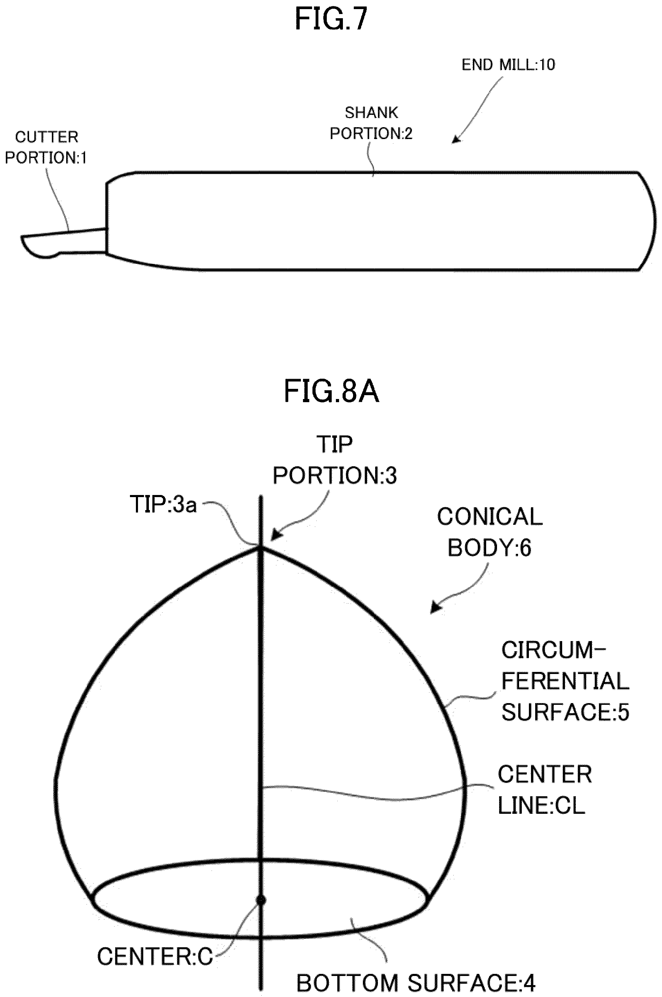

The end mill of the present invention will be described in detail with reference to drawings hereinafter. Fig. 7 is a schematic view illustrating an example of the end mill of the present invention. The end mill 10 of Fig. 7 includes a cutter portion 1 and a shank portion 2. The cutter portion 1 is fixed to the shank portion 2 by brazing. The cutter portion is a single blade, and has a substantially convex shape having a curved surface.

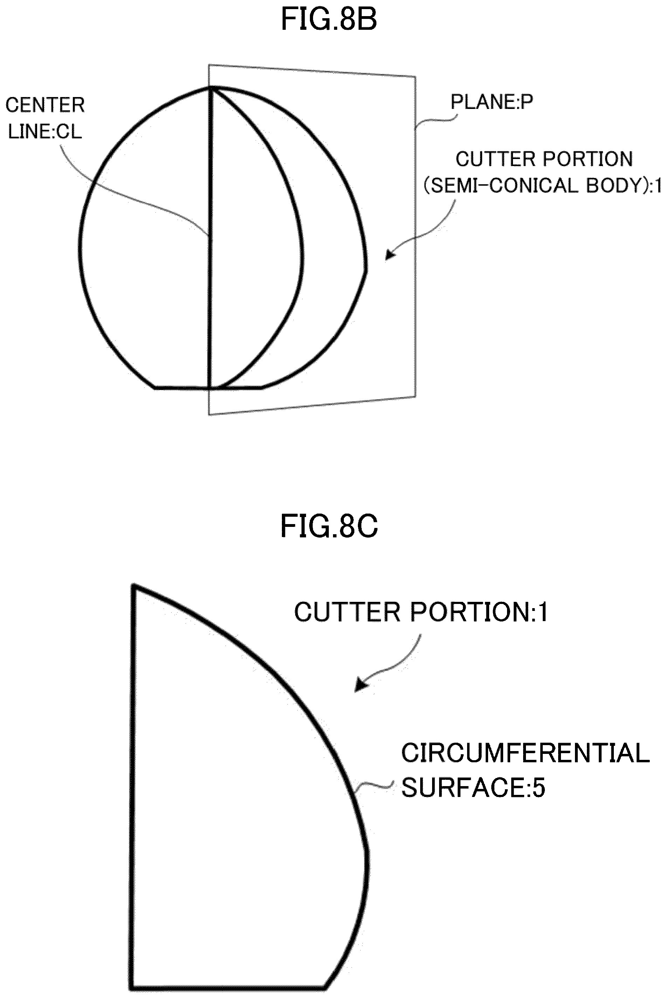

As illustrated in Fig. 8A, the cutter portion 1 is a semi-conical body of a substantially convex shape (substantially semi-conical shape) having a curved surface, where the semi-conical shape is a half of a conical body 6 obtained by dividing the conical body 6 into two along a plane including a center line CL. The conical body 6 includes a tip portion 3, a bottom surface 4 having a circular shape, and a circumferential surface 5 including an enlarged diameter region having a larger diameter than the bottom surface 4, where a tip 3a of the tip portion 3 is positioned on the center line CL passing through a center C of the bottom surface 4 (Fig. 8B). Note that Fig. 8C is a view illustrating a half of the cutter portion 1 that has the substantially convex shape (substantially semi-conical shape) having the curved surface, which is illustrated in Fig. 8B, obtained by dividing the cutter portion 1 into two along the plane P including the center line CL.

As illustrated in Figs. 8B and 8C, in the cutter portion 1, a surface profile of the circumferential surface 5 on a cross-section of the cutter portion 1 is preferably a curved line, and more preferably an arc or an elliptical arc, where the cross-section of the cutter portion 1 is perpendicular to both the plane P including the center line CL and the bottom surface 4, and includes the center line CL.

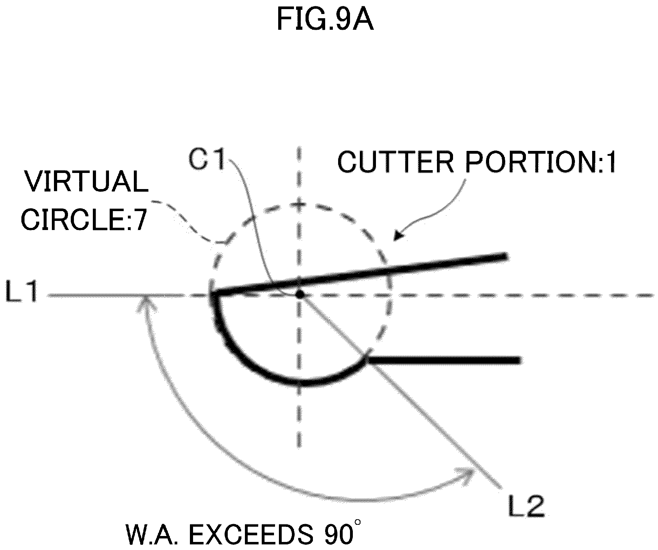

As illustrated in Fig. 9A, in the cutter portion 1, an angle (effective blade range (W.A.)) formed between a straight line L1 connecting an end of the cutter portion 1 of the end mill on the rotational axis side and a center C1 of a virtual circle 7 of the cutter portion and a straight line L2 connecting between the other end and the center C1 of the virtual circle 7 of the cutter portion 1 is preferably greater than 90 degrees and less than 180 degrees, more preferably 100 degrees or greater and 150 degrees or less, and yet more preferably 110 degrees or greater and 140 degrees or less.

When the above angle is greater than 90 degrees and less than 180 degrees, a range of the cutter portion functioning as a blade (effective blade range (W.A.)) is expanded as illustrated in Fig. 9A, and therefore a slope of the rotational axis of the cutter portion of the end mill can be set steep, thereby achieving deep milling of a fine microlens.

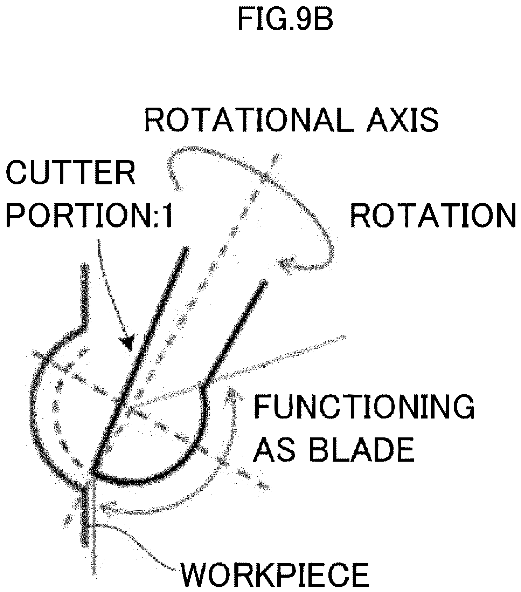

Moreover, the cutter portion 1 is preferably disposed on one side with respect to the rotational axis of the cutter portion 1 of the end mill, as illustrated in Fig. 9B. According to the above configuration, the cutter portion of the end mill is formed of a single blade so that a fine microlens having an outer diameter of 100 µm or less can be used.

The end mill of the present invention can achieve cutting of a deeper and fine microlens, which has been difficult to achieve by bit cutting of the related art. Moreover, since the effective blade range (W.A.) of the cutter portion of the end mill is expanded, cutting of a microlens performed using the end mill of the present invention can achieve deep milling of a fine microlens having a size that is up to 1/2 of the radius of the cutter portion of the end mill without causing a processing defect due to a center of rotation of the end mill.

Accordingly, the end mill of the present invention is suitable as an end mill for microlens processing.

### (Method of producing microlens production mold and apparatus of producing microlens production mold)

The method of producing the microlens production mold according to the present invention includes: use of the end mill of the present invention; and processing of a processing surface of a mold base with a rotational axis of the end mill being tilted by an angle of greater than 0 degrees and less than 90 degrees in a manner such that a center of rotation of the end mill is not positioned on the processing surface.

During the above method, processing is preferably performed by tilting the rotational axis of the cutter portion of the end mill by an angle of 40 degrees or greater and 80 degrees or less.

According to the method of producing the microlens production mold of the present invention, deep milling of a fine microlens having a size that is up to approximately 1/2 of a radius (R) of the cutter portion of the end mill can be achieved without causing, on a processing surface of a workpiece, a processing defect due to a center of rotation of the cutter portion of the end mill.

Examples of a material of the mold base that is a cutting target include copper, iron, aluminum, aluminum alloys, stainless steel, and the like. The mold base preferably includes a surface layer formed of nickel-phosphorus (Ni-P) plating, copper (Cu) plating, or the like at a surface of the mold base.

A size of the mold is not particularly limited, and may be appropriately selected according to the intended purpose.

Examples of a shape of the mold base include flat shapes, stamper shapes, roll shapes, and the like.

The apparatus of producing the microlens production mold according to the present invention includes the end mill of the present invention, and may further include other devices as necessary. Note that as the apparatus of producing the microlens production mold, a machining center (M/C) or a milling machine may be used as it is.

As the other devices, for example, a fixer disposed to extend in the vertical direction relative to a base of the apparatus of producing the microlens production mold, a stage supported by the fixer, and a rotary support member supported by the fixer are included.

The stage is supported by the fixer in a manner such that the stage can be movable in all three directions of X, Y, and Z by a driver. A mold base that is a processing target is secured on the stage.

The rotary support member is supported by the fixer so that the rotary support member is rotatable about an axis along the X-axis. The end mill is rotatably secured on the rotary support member so that the rotational axis of the end mill extends in a direction vertical to the axis along the X-axis. Note that the rotary support member is not limited to the above embodiment. For example, the rotary support member may be configured so that the rotary support member rotatable about an axis along the Y-axis.

A microlens produced by the method of producing the microlens production mold and the apparatus of producing the microlens production mold according to the present invention has, for example, a semi-circular shape having an outer diameter of 100 µm or less and a depth of 10 µm to 50 µm, and is high quality without a processing defect due to a center of rotation of the end mill.

A microlens array, in which a large number of the microlenses are aligned, is suitably used in the fields where light is controlled by condensing, diffusion, reflection, diffraction, and the like, such as liquid crystal displays, optical coupling elements, image input devices, and the like.

### Examples

Examples of the present invention will be described hereinafter, but the present invention is not limited to these examples in any way.

### (Comparative Example 1)

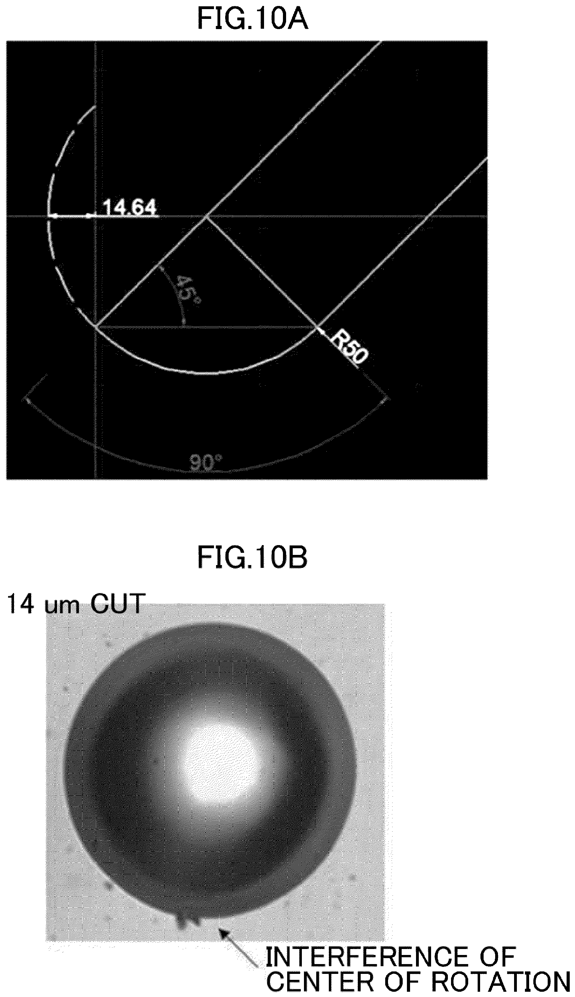

In Comparative Example 1, an end mill having a typical cutter portion having a radius of 50 µm (R50) and an effective blade range (W.A.) of 90° as illustrated in the CAD image of the cutter portion of Fig. 10A was used. The material of the cutter portion of the end mill was a single-crystal diamond.

The material of a mold base used, which was a cutting target, was copper, the shape of the mold base was a cylindrical shape, and the dimensions of mold base were 132 mm in diameter and 250 mm in length.

A lathe was used as an apparatus of producing a microlens production mold. The end mill was held in the lathe with the mold base being fastened to the lathe, and the end mill was rotated at 100,000 min⁻¹ or greater, thereby performing cutting.

As illustrated in Fig. 10A, the effective blade range (W.A.) of the cutter portion of the end mill of Comparative Example 1 was 90°. Cutting of a microlens was performed by tilting the rotational axis of the cutter portion of the end mill by 45° relative to the processing surface of the mold base. As a result, as the mold base was cut into the depth of approximately 14 µm, a processing defect (cutting mark) caused by interference of the rotational center was formed on the processing surface of the mold base as illustrated in Fig. 10B, and therefore it was difficult to perform deep milling of the microlens.

### (Example 1)

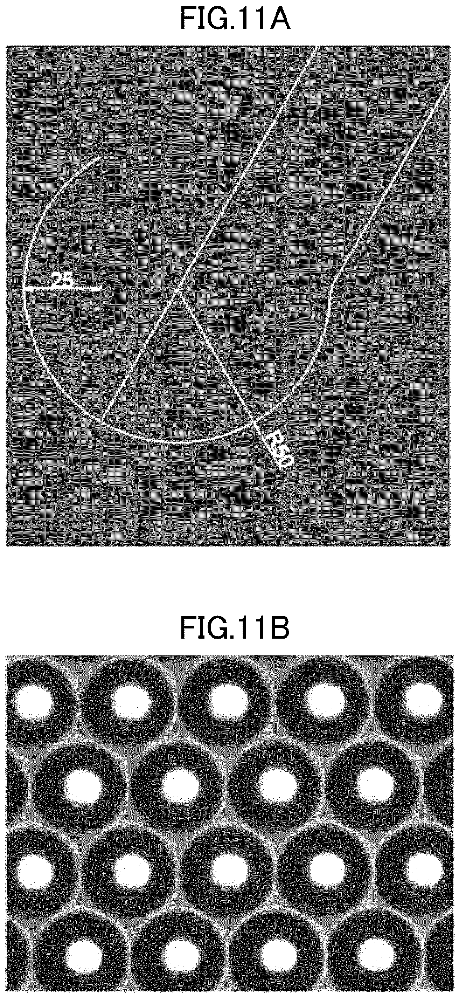

Cutting of a microlens was performed in the same manner as in Comparative Example 1, except that an end mill having a cutter portion that has a radius of 50 µm (R50) and an effective blade range (W.A.) of 120° as illustrated in the CAD image of the cutter portion of Fig. 11A was produced, and the rotational axis of the cutter portion of the end mill was tilted by 60° with respect to the processing surface of the mold base so that the center of rotation of the end mill would not be positioned on the processing surface.

As a result, as illustrated in Fig. 11B, a microlens array having a clean honeycomb structure in the depth of 24 µm could be cut in the processing surface of the mold base without causing a processing defect due to the center of rotation of the end mill.

Accordingly, it was found that the end mill of Example 1, in which the effective blade range (W.A.) of the cutter portion was expanded to 120°, could cut the processing surface of the mold into the depth that was 1/2 (25 µm) of the radius 50 µm (R50) of the cutter of the end mill without causing a processing defect on the processing surface due to the center of rotation of the end mill by tilting the rotational axis of the cutter portion of the end mill by 60° with respect to the processing surface of the mold base so that the center of rotation of the end mill would not be positioned on the processing surface.

Preferable embodiments of the present invention will be added hereinafter.
<1> An end mill including:
   a cutter portion that has a convex shape having a curved surface, the convex shape being a half of a conical body obtained by dividing the conical body into two along a plane including a center line passing through a center of a bottom surface of the conical body,
   wherein the conical body includes a tip portion, the bottom surface having a circular shape, and a circumferential surface including an enlarged diameter region having a diameter larger than a diameter of the bottom surface, where a tip of the tip portion is positioned on the center line passing through the center of the bottom surface.
<2> The end mill according to <1>,
   wherein a surface profile of the circumferential surface on a cross-section of the cutter portion is a curved line, where the cross-section of the cutter portion is perpendicular to both the plane including the center line and the bottom surface, and includes the center line.
<3> The end mill according to <2>,
   wherein the curved line is an arc or an elliptical arc.
<4> The end mill according to any one of <1> to <3>,
   wherein the end mill is rotatable about a rotational axis, and an angle formed between a straight line connecting an end of the cutter portion on a rotational-axis side and a center of the cutter portion, and a straight line connecting the other end of the cutter portion and the center of the cutter portion is greater than 90 degrees and less than 180 degrees, and
   the cutter portion is disposed on one side with respect to the rotational axis.
<5> The end mill according to <4>,
   wherein the angle is 100 degrees or greater and 150 degrees or less.
<6> The end mill according to <2>,
   wherein a maximum diameter of the surface profile of the circumferential surface is 100 µm or less.
<7> The end mill according to any one of <1> to <6>,
   wherein the cutter portion includes a single-crystal diamond.
<8> The end mill according to any one of <1> to <7>, further including a shank portion,
   wherein the cutter portion is fixed to the shank portion by brazing.
<9> The end mill according to any one of <1> to <8>,
   wherein the end mill is a microlens processing end mill.
<10> A method of producing a microlens production mold, the method including:
   using the end mill of any one of <1> to <9>; and
   processing a processing surface of a mold base with a rotational axis of the end mill being tilted by an angle of greater than 0 degrees and less than 90 degrees in a manner such that a center of rotation of the end mill is not positioned on the processing surface.
<11> An apparatus of producing a microlens production mold, the apparatus including the end mill of any one of <1> to <9>.

The present application claims priority based on Japanese Patent Application No. 2022-116247, filed on July 21, 2022, the entire content of which are incorporated herein by reference.

### REFERENCE SIGNS LIST

- 1: cutter portion
- 2: shank portion
- 3: tip portion
- 4: bottom surface
- 5: circumferential surface
- 6: conical body
- 7: virtual circle
- 10: end mill
- CL: center line

## Claims

1. An end mill comprising:
a cutter portion that has a convex shape having a curved surface, the convex shape being a half of a conical body obtained by dividing the conical body into two along a plane including a center line passing through a center of a bottom surface of the conical body,
wherein the conical body includes a tip portion, the bottom surface having a circular shape, and a circumferential surface including an enlarged diameter region having a diameter larger than a diameter of the bottom surface, where a tip of the tip portion is positioned on the center line passing through the center of the bottom surface.

2. The end mill according to claim 1,
wherein a surface profile of the circumferential surface on a cross-section of the cutter portion is a curved line, where the cross-section of the cutter portion is perpendicular to both the plane including the center line and the bottom surface, and includes the center line.

3. The end mill according to claim 2,
wherein the curved line is an arc or an elliptical arc.

4. The end mill according to any one of claims 1 to 3,
wherein the end mill is rotatable about a rotational axis, and an angle formed between a straight line connecting an end of the cutter portion on a rotational-axis side and a center of the cutter portion, and a straight line connecting the other end of the cutter portion and the center of the cutter portion is greater than 90 degrees and less than 180 degrees, and
the cutter portion is disposed on one side with respect to the rotational axis.

5. The end mill according to claim 4,
wherein the angle is 100 degrees or greater and 150 degrees or less.

6. The end mill according to claim 2,
wherein a maximum diameter of the surface profile of the circumferential surface is 100 µm or less.

7. The end mill according to any one of claims 1 to 3,
wherein the cutter portion includes a single-crystal diamond.

8. The end mill according to any one of claims 1 to 3, further comprising a shank portion,
wherein the cutter portion is fixed to the shank portion by brazing.

9. The end mill according to any one of claims 1 to 3, wherein the end mill is a microlens processing end mill.

10. A method of producing a microlens production mold, the method comprising:
using the end mill of any one of claims 1 to 3; and
processing a processing surface of a mold base with a rotational axis of the end mill being tilted by an angle of greater than 0 degrees and less than 90 degrees in a manner such that a center of rotation of the end mill is not positioned on the processing surface.

11. An apparatus of producing a microlens production mold, the apparatus comprising:
the end mill of any one of claims 1 to 3.
